# EUROPEAN PATENT APPLICATION

(11) **EP 1 736 056 A1**
(43) Date of publication of application: **27.12.2006**
(21) Application number: 06012532.5
(22) Date of filing: 19.06.2006
(51) Int. Cl.: A21D 10/02, A21D 8/02, A21D 13/00

(54) **A method for making a dough product frozen after the final-proofing and a frozen bread dough product made by utilizing the same method**

(30) Priority: 24.06.2005 JP 2005184417
(71) Applicant: Boulangerie Pinokio Co., Ltd., Kainan-shi Wakayama (JP)
(72) Inventor: ISHIKURA, Hideo, Wakayama (JP)
(74) Representative: Kastel, Stefan

(57) **Abstract**

A method for making a dough product frozen after the final-proofing comprising the steps of (a) preparing a primary dough by mixing and kneading raw materials of the dough, (b) dividing the primary dough into some sections and then shaping each piece of the primary dough into an appropriate shape, (d) subjecting each divisional shaped dough to the final-proofing, and (e) freezing the final-proofed divisional shaped dough, is characterized in that each surface of the divisional shaped dough is coated with a quantity of material effective to reduce an escape of gas cells from the shaped dough before having each divisional shaped dough subjected to the final-proofing. In the aforesaid method, mixing and kneading is conducted at a temperature of 22°C to 27°C. Additionally, in the above said method, the final-proofing is conducted at a temperature of 22°C to 27°C. Further, a frozen bread dough product is made by utilizing the method mentioned above.

## Description

### BACKGROUND OF THE INVENTION

### 1. Field of the Invention

The present invention relates to a method for making a dough product frozen after the final-proofing, especially, a large amount of gas cells as it proceeds with leavening being effectively retained without using any conventional additives, and relates to a frozen bread product made by utilizing the same method ed frozen shaped dough.

### 2. Description of the Related Art

Conventionally, in manufacturing bread products, there is a limitation on providing consumers with fresh-baked bread in a store due to requiring for a long time to produce bread. As a means for solving the problem, a technology for freezing dough has been developed. Such frozen dough is extremely useful for making a reasonable manufacturing process of bread and for providing fresh-baked breads to consumers. Additionally, if the frozen dough can be stored in a householdfreezer, it is easily possible to give a taste of fresh-baked bread by using a homekitchen oven.

In manufacturing the baked bread, a series of steps which includes at first preparing a primary dough by mixing and kneading raw materials of the dough, dividing the primary dough obtained thereby into some sections and shaping each piece of the primary dough (divisional dough) into a appropriate shape respectively, subjecting the divisional shaped dough to a yeast-fermentation (final-proofing), and baking the final-proofed shaped dough with a oven. A method for manufacturing a frozen dough is roughly classified into the following types: a plate-type dough freezing method in which a primary dough obtained by mixing and kneading raw materials of the dough direct to a freezing process, a ball dough freezing method in which a ball-shaped dough obtained by dividing and rounding such a primary dough made as above is subjected to a freezing process, a shaped dough freezing method in which a primary dough shaped into a appropriate form is subjected to a freezing process, and a final-proofed freezing method in which a shaped primary dough is subjected to a freezing process after having a shaped primary dough proofed. There has been the most interested in the last final-proofed freezing method among the abovementioned methods as to requiring relatively lesser time and labor after thawing the frozen dough than as to another's and has been actively developed as described in, for example, the Japanese patent (unexamined) publication No.10-327741, and Japanese Publication "PROBAKERS 3." published by SHOGAKUKAN, Japan, February 20, 1999, p.169.

The aforementioned dough frozen after the final-proofing (the final-proofed frozen dough) has a feature in volume that the volume of the dough is larger than that of the frozen dough product obtained by use of the above said plate dough freezing method, ball dough freezing method, or shaping and freezing method. In one of the later methods, since it has been permitted to freeze the dough at the initial or middle stage of a series of steps for manufacturing bread, yeast-fermentation of the dough is unfinished frequently and the volume of the dough is so small at the time of freezing that a wide space is unnecessary for storing and transporting the frozen dough. On the contrary, in the case of the final-proofed frozen dough, since the dough is frozen after the final-proofing, the volume of the dough becomes large at the time of freezing, and a wide space is necessary for storing and transporting the frozen dough product. Further, since the fermentation is sufficiently advanced in the final-proofed dough, a condition thereof is more unstable than that of the dough obtained by the other freezing methods. Therefore, the rise condition, the oven spring, is bad in baking the frozen dough, and the dough is baked into firm and heavy bread.

Taking the aforementioned problems into consideration, the present invention was done, and it is an object of the present invention to provide the final-proofed frozen dough for which a wide space for storage and transportation is unnecessary and which can be baked into bread having excellent sensory qualities, for example, appearance, mouse-feeling and flavor.

### SUMMARY OF THE INVENTION

In order to achieve the above object, a method for making a dough product frozen after the final-proofing according to the present invention comprising the steps:
(a) preparing a primary dough by mixing and kneading raw materials of the dough;
(b) dividing the primary dough into some sections and then shaping each divisional piece of the primary dough into an appropriate shape;
(c) coating each surface of the divisional shaped dough with a quantity of material arresting an escape of gas cells confined therein;
(d) subjecting each divisional shaped dough to the final-proofing; and
(e) freezing the final-proofed divisional shaped dough.

Additionally, in the above-mentioned configuration, mixing and kneading raw materials of the dough is conducted at a temperature of 22°C to 27°C.

Further, in the above-mentioned configuration, the final-proofing of the divisional shaped dough is conducted at a temperature of 22°C to 27°C.

Further in addition, final proofed frozen bread dough according to the present invention is produced by using the method described as above.

According to final-proofed frozen dough of the present invention, since the step of applying a coating which retains an escape of gas cells from the surface of shaped dough, is performed after the step of shaping and before the step of final-proofing is performed, the gas cells can hardly leak from the surface of the dough in the steps of final-proofing and freezing. In such a manner, the final-proofed frozen dough of the present invention occupies so many gas cells having a small diameter therein so that, the gas cells in the final-proofed frozen dough, when the dough being thawed and baked, are rapidly expand in a short period of time, and bread having a volume of about 3 times as that of the frozen dough can be obtained. Conversely, the volume of the frozen dough can be reduced to one-third of that of the bread baked from the frozen dough. Accordingly, the volume of the frozen dough can be reduced lesser than that of conventional frozen dough regardless of the frozen dough being final-proofed, and a wide space for storage and transportation of the frozen dough becomes unnecessary. Additionally, since the surface of the final-proofed frozen dough product of the present invention is protected against a stimulus from the outside by the coating in the steps of final-proofing and freezing, it is possible to produce bread baked from the dough has a fine texture and is excellent in appearance, mouse-feeling and flavor. On the other hand, a method for improving the quality of frozen dough by adding various additives to raw materials in normal final-proofed frozen dough has been developed. However, even if such additives are not used for the final-proofed frozen dough of the present invention, bread having an excellent quality as described above can be produced from the final-proofed frozen dough of the present invention.

Additionally, when the step of mixing and kneading is conducted at a temperature of 22°C to 27°C, the activity of yeast is arrested therein and becomes available for lowering an expansion of the dough in the following steps thereafter.

Additionally, when the step of final-proofing is conducted at a temperature of 22°C to 27°C, that is, the temperature of the final-proof is lower than that of a general final-proof, taste and sweetness increase, fermentation is suppressed in this step, and the expansion of the final-proofed dough can be reduced in the steps thereafter.

### DETAILED DESCRIPTION OF THE PREFERRED EMBODIMENT

A preferred embodiment of the present invention will be described hereinafter.

In final-proofed frozen dough according to the embodiment, there is no limitation as to the types of materials used in preparation of dough, the combination rate thereof, or the like, and raw materials of the dough constituted by wheat flour, water, yeast, skimmed milk, sugar, salt and the like can be properly prepared and used in accordance with the type of bread as conventionally.

In the step of mixing and kneading, the raw materials of the dough are mixed and kneaded and first dough is prepared. However, in this step, a straight dough method (straight method) may be employed in which the whole raw materials are mixed and kneaded at a time and obtained dough is fermented, or a sponge dough method may be employed in which a part of the raw materials of the dough is mixed and kneaded and fermented and the rest of the raw materials are added thereto and further kneaded. The temperature at the time of mixing and kneading is adjusted so as to be about 30°C with use of hot water having a predetermined temperature in place of the water as a general raw material. However, in the present invention, the water is used in place of the hot water in order to suppress the activity of the yeast, and the step of mixing and kneading is performed at a temperature of 22°C to 27°C.

Incidentally, when the step of mixing and kneading is performed at the temperature of 22°C or less, the generation amount of gluten from the wheat flour is small, and it is very difficult to knead and make the raw materials solid into the dough. Therefore, it takes a long time to knead, the temperature of the dough gradually rises by mixing with frictional heating and it can not keep the dough at the temperature 22°C or less.

On the other hand, since the yeast becomes more active when the step of mixing and kneading is performed at 27°C or more, the fermentation of the dough in the subsequent bench time and final-proof is advanced in a short period of time. As a result, the generation amount of gas in the fermentation arises and the diameter of the expanded gas cell becomes large so that the number of the gas cells reduces. Accordingly, the frozen dough does not largely expand in the steps of thawing and baking compared with a case where many gas cells having a small diameter respectively are trapped in the dough, that is, the oven spring is insufficient, and bread baked from the dough has a rough texture and is inferior in quality of bread, for example, appearance, mouse feeling, flavor and the like.

In the step of shaping, at first, the dough mixed and kneaded in the step of mixing and kneading of raw materials is placed at a temperature of 22 - 27°C and a humidity of 50 - 70% in a room for 20 - 30 minutes floor time and then the dough is divided into some sections and rounded respectively, and the divisional rounded dough is subjected to a bench time for 40 - 60 minutes at the same range of the temperature and humidity as those of the floor time. Further, the divisional rounded dough is subjected to a light punching, and the divisional rounded dough is shaped into a final product respectively.

Here, the floor time is set up in a relatively short time, because of having the fermentation in a floor time reduced to about 50% of normal fermentation and having the expansion of the dough decreased low.

On the contrary, the bench time is set up in a relatively long time, because, when the bench time being short, the dough becomes unstable in condition, and when the dough being shaped thereafter, a surface of the dough results in rough, the oven spring being insufficient and it becomes , and resultantly shaping becomes difficult.

In the step of coating, each of the divisional shaped dough is coated with a quantity of material effective to reduce an escape of gas cells from the shaped dough. For example, materials applicable for coating include yolk, butter, margarine, shortening or the like.

In the step of final-proofing, the shaped dough coated with coating material, is proofed for 30 - 60 minutes in the room controlled at a room temperature of from 22°C to 27°C and at air humidity of from 50% to 70%. The fermentation during the final proofing is reduced to 50% of the normal fermentation in similar way to the primary fermentation during the floor time as described above. Although the total amount of volume expansion ratio from the beginning of primary fermentation to the final proofing is approximately 3 to 4 times as large as that of the immediate non-proofed dough manufactured by mixing and kneading, the volume expansion ratio of the dough according to the present invention is reduced approximately to 1.2 to 2.5 times as large as the initial volume of the dough through the whole fermentation during the floor time and the final-proofing, the volume of the frozen dough is reduced.

When the step of final-proofing is performed at 22°C or less, it takes a long time to suitably ferment the dough. When the step of final-proofing is performed at 27°C or more, sweetness and taste of the bread cannot be obtained and the flavor of the bread becomes inferior. Additionally, when the step of final-proofing is performed at 27°C or more, the fermentation is advanced in a short period of time similarly to the case of the step of mixing and kneading. Therefore, the diameters of the air bubbles generated in the dough become large, the number of generated air bubbles is reduced by combination, and the diameters of the combined air bubbles become large. Accordingly, the frozen dough does not largely expand in the steps of thawing and baking compared with the case where many air bubbles having a small diameter are trapped in the dough, that is, the oven spring is bad, and the baked bread has a rough texture and is inferior in appearance, palate feeling, flavor and the like.

In the step of freezing, the final-proofed dough is frozen and stored. Although a condition such as a freezing speed and a freezing temperature range are not particularly limited, a rapid freezing is desirable. After freezing, the frozen dough is vacuum-packed and stored in a freezer.

Finally, in the steps of thawing and baking, as a thawing method of the frozen dough, a method such as leaving in a room is applicable. When the frozen dough is thawed by a microwave oven, the heating time of about 20 seconds is required for a 60g bun. The dough can be uniformly thawed to the center part in a short period of time with use of the microwave oven. The step of baking is performed in the oven preheated to 200°C for about 10 minutes.

As described above, since the present invention includes the step of applying the coating agent on the surface of the dough for preventing the gas from leaking from the shaped dough, the gas can be prevented from leaking from the surface of the dough in the steps of final-proofing and freezing. Further, since the final-proof is performed at the humidity lower than the normal humidity, that is, 50% to 70%, the elongation of the surface of the dough is prevented. That is, the dough may be likened to be in full armor. Thus, many air bubbles having a small diameter are trapped in the dough and, in other words, pressurized, and the air bubbles in each step of thawing and baking the frozen dough rapidly expand in a short period of time so that fermentation is completed. Accordingly, the oven spring is good, the baked bread has a fine texture, is excellent in appearance, palate feeling, flavor and the like, and is soft and light.

Additionally, since the floor time and the final-proof are performed at a relatively low temperature, that is, 22°C to 27°C, the sweetness and taste can be obtained. Further, the volume of the final-proofed dough is suppressed to about 1.2 to 2.5 times as that of the first dough and the volume of the frozen dough can be reduced in the present invention, although the volume is about 3 to 4 times normally. Accordingly, the volume of the dough is smaller than that of the conventional dough regardless of the step of final-proofing being completed, the volume of the frozen dough can be suppressed to one-third of that of the baked bread, and a wide space for storage and transportation of the frozen dough is unnecessary.

Since the final-proofed frozen dough is obtained by freezing the final-proofed dough just before baking, it takes only from 10 or so minutes to 20 minutes to thaw and bake the frozen dough if the microwave oven is used for thawing, and it is possible to provide fresh-baked bread in a store as the need arises. Additionally, in a household, if the frozen dough is stored in the freezer, it is possible to always easily taste the fresh-baked bread by baking the frozen dough in a household oven. Example

Example of the present invention will be described hereinafter.

As shown in the Example column of Table 1, 100 parts by weight of strong wheat flour, 6 parts by weight of sugar, 2 parts by weight of salt, 5 parts by weight of wild yeast, 3 parts by weight of skimmed milk, 6 parts by weight of oil-and-fat and 66 parts by weight of water were mixed and kneaded at 23°C according to the straight method, floor time was performed at 24°C and 60% RH for 20 minutes, dough was divided and rounded, bench time was performed at 24°C and 60% RH for 60 minutes, light punching was performed to the dough, the dough was shaped, a coating agent was applied to the dough, and the dough was final-proofed at 25°C and 60% RH for 55 minutes, rapidly frozen and then vacuum-packed, and thus final-proofed frozen dough was manufactured. After the frozen dough is stored in a freezer for one week, a piece of frozen dough was thawed by a microwave oven for 20 seconds and baked into bread with the oven at 200°C for 10 minutes.

### Comparative example 1

As comparative example 1, bread was manufactured according to a versatile manufacturing method in which the dough is not frozen and each step from mixing and kneading to baking is successively performed. That is, the same raw materials as the above Example were used, and each step shown in the column at the right of Table 1, that is, mixing and kneading at 29°C, floor time for 30 minutes, bench time for 35 minutes, final-proof at 35°C and 85% RH for 80 minutes, applying the coating agent to the final-proofed dough, freezing is not performed, and baking the final-proofed dough, was performed under the same condition as the Example except for the above.

### Comparative example 2

In order to manufacture a dough without a step of applying the coating agent, as Comparative example 2, bread was manufactured under the same condition as the above Example except for applying the coating agent to the dough.

Each volume of the dough or bread after mixing and kneading, final-proof, thawing and baking in the Example, Comparative example 1 and Comparative example 2 was measured.

The measurement of the volume of the dough was performed in such a way that: the dough or bread after each step was wrapped with a watertight film; the wrapped dough or bread was pressed and sunk into a water tank filled with water with a fine swab; and the volume of the water pushed aside by the dough was calculated based on the rise height of the water level measured just after sinking and the bottom area of the water tank. Additionally, the volume expansion ratio of the dough after final-proofing to the dough after mixing and kneading and the volume expansion ratio of the bread after baking to the dough after final-proofing were measured. The measurement results and each volume expansion ratio are shown in Table 2.

Table 2 reveals that the volume after final-proof in the Example is suppressed to be smaller than that in Comparative example 1.

The volume of the dough after final-proofing was 3.5 times as that of the dough after mixing and kneading in Comparative example 1, however, that in the Example could be suppressed to 2.1 times. On the other hand, Table 2 reveals that the volume expansion ratio in the Example is much higher than that in Comparative example 1 in baking.

Additionally, in Comparative example 2, the volume of the dough at the time of thawing the final-proofed frozen dough was the same as that after final-proofing, and the volume of the bread after baking did not increase much. That was because the gas leaked from the surface of the dough in the steps of final-proofing and freezing after shaping due to non-application of the coating agent on the surface of the shaped dough and the oven spring in baking was bad.

**Table 1**

| | | | Example | Comparative example 1 |
|---|---|---|---|---|
| 1. Mixing and kneading | Mixing | | Straight Dough Method Raw materials of the dough excepting for margarine mixed in Vertical Mixer at Low speed for 5 minutes, and then with adding margarine thereto, at Low speed for 2 minutes, and then at Middle speed for 8 minutes. | Same as on the left. |
| | Kneading Temperature | | 23°C | 29°C |
| 2. Shaping | Floor Time | Temp. | 24°C | Same as on the left. |
| | | Humidity | 60% | Same as on the left. |
| | | Time | 20 minutes | 30 minutes |
| | Dividing(Cutting) | | Dividing the dough product into some sections (60 g section) and Rounding them | Same as on the left. |
| | Bench Time | Temp. | 24°C | Same as on the left. |
| | | Humidity | 60% | Same as on the left. |
| | | Time | 60 minutes | 35 minutes |
| | Shaping | | Each rounded piece of the dough subjected to lightly punching and then Shaping into an appropriate shape | Same as on the left. |
| 3. Coating | | | Coating a surface of the shaped dough with a coating agent | Taking no coating at the stage, but Coating with a coating agent after final proof |
| 4. Final-proofing | Temperature | | 25°C | 35°C |
| | Humidity | | 60% | 85% |
| | Time | | 55 minutes | 80 minutes |
| 5. Freezing | | | Rapid freezing and then Vacuum-packaging the shaped dough | Not performed |
| 6. Thawing and Baking | Thawing | | Performed by using a microwave oven for 20 seconds per batch | Not performed |
| | Baking | | Performed by using a pre-heated oven for 10 minutes on 200°C | Same as on the left. |

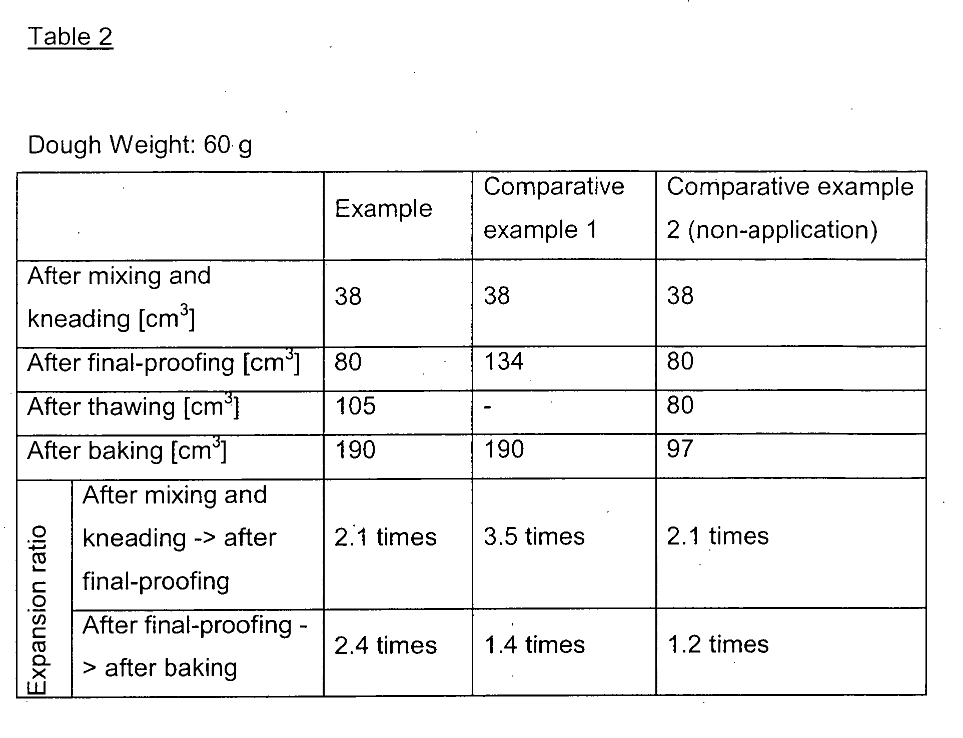

## Claims

1. A method for making a final-proofed frozen dough comprising the steps:
preparing a primary dough by mixing and kneading raw materials of dough; dividing the primary dough into some sections and then shaping each divisional piece of the primary dough into an appropriate shape; subjecting each divisional shaped dough to final-proofing; and freezing the final-proofed divisional shaped dough, is **characterized in that** each surface of the divisional shaped dough is coated with a quantity of material effective to reduce an escape of gas cells from the shaped dough before having each divisional shaped dough subjected to the final-proofing.

2. The method for making a final-proofed frozen dough according to claim 1, wherein mixing and kneading raw materials of dough is performed at a temperature of 22°C to 27°C.

3. The method for making a final-proofed frozen dough according to claim 1 or 2, wherein final-proofing is performed at a temperature of 22°C to 27°C.

4. A frozen bread dough product that is manufactured by utilizing the method according to any one of claims 1 to 3.
